# EUROPÄISCHE PATENTSCHRIFT

(11) **EP 0 817 937 B1**
(45) Veröffentlichungstag und Bekanntmachung des Hinweises auf die Patenterteilung: **20.09.2000**
(21) Anmeldenummer: 96907294.1
(22) Anmeldetag: 28.03.1996
(51) Int. Cl.: F16L 55/28, F16L 55/40, G21C 17/017

(54) **ROHRINNENMANIPULATOR**
INTERNAL PIPE MANIPULATOR
MANIPULATEUR INTERNE DE TUYAU

(30) Priorität: 28.03.1995 DE 19511310
(43) Veröffentlichungstag der Anmeldung: 14.01.1998
(73) Patentinhaber: SIEMENS AKTIENGESELLSCHAFT, 80333 München (DE)
(72) Erfinder: SEEBERGER, Erich, D-91091 Gro enseebach (DE); HITZEL, Rainer, D-63322 Rödermark (DE)
(86) Internationale Anmeldenummer: DE9600541
(87) Internationale Veröffentlichungsnummer: WO9630692

(56) Entgegenhaltungen:
- DE-A- 3 139 734
- DE-A- 3 412 519
- GB-A- 2 122 713
- US-A- 3 775 612
- US-A- 4 537 136
- US-A- 4 601 133

## Beschreibung

Die Erfindung betrifft einen Rohrinnenmanipulator mit Einrichtungen für die Bearbeitung, insbesondere für die Prüfung, von Rohrwandungen mit zwei Fahrgestellen, von denen Rollkörper mittels entgegengesetzt wirkenden Antriebe gegen die Rohrwandung bewegbar sind, und mit einem zwischen den Fahrgestellen angeordneten und an diesen um eine gemeinsame, in Fahrtrichtung verlaufende Systemachse (A-A) drehbar gelagerten Drehgestell mit einem axial verschiebbaren Halter mit mindestens einem radialen Arm an dem mindestens je ein Anschlagkörper und eine Bearbeitungseinheit, radial verschiebbar angeordnet sind, wobei das Drehgestell zwei radiale Flanschplatten aufweist, zwischen denen
a) ein Drehantrieb für das Drehgestell,
b) ein Stellmotor eines Axialantriebs für den Halter der Bearbeitungseinheiten,
c) eine Gewindespindel des Axialantriebs und
d) eine Führungsstange für den Halter mit den Bearbeitungseinheiten
in der Weise angeordnet sind, daß die Achsen von a), b), c) und d) parallel zur Systemachse (A-A) verlaufen.

Ein derartiger Manipulator, bei dem der Drehantrieb, der Stellmotor, die gewindespindel und die Führungsstange um die Systemachse herum gruppiert sind, ist aus der US-A-4 601 133 bekannt.

Derartige Manipulatoren dienen für die Bearbeitung von Rohrleitungen, die nicht begehbar sind, sei es aus räumlichen Gründen, sei es aufgrund von Hitze, Druck und Strahlung. Manipulatoren dieser Art können selbstfahrend ausgebildet sein, sie können aber auch gezogen oder geschoben werden und Teil einer Reihenanordnung einer ganzen Gruppe von Rohrfahrzeugen sein. Unter dem Ausdruck "Bearbeitung" werden sämtliche Vorgänge verstanden, die sich mit der Beschaffenheit der zu befahrenden Rohrleitung befassen, sei es eine Inspektion mit Registrierung des optischen Ist-Zustandes, eine Ultraschalluntersuchung von Schweißnähten, seien es mechanische Bearbeitungsvorgänge wie Schweißen oder Schleifen, oder seien es Beschichtungsvorgänge, durch die die Rohrinnenwand beispielsweise mit einem Schutzüberzug versehen werden soll. Besonders im Reaktorbau werden an den Zustand von Rohrleitungen sowie an die Dokumentation dieses Zustandes extrem hohe Anforderungen gestellt, denen die Funktion eines solchen Rohrinnenmanipulators genügen muß.

Durch die DE 34 12 519 C2 ist ein Rohrinnenmanipulator der eingangs beschriebenen Gattung bekannt, bei dem der Drehantrieb für das Drehgestell, der Stellmotor des Axialantriebes für den Halter der Bearbeitungseinheiten, die Gewindespindel des Axialantriebs und eine Führungsstange für den Halter mit den Bearbeitungseinheiten innerhalb eines Quadranten des Manipulatorquerschnitts untergebracht sind. Der Tragkörper des Drehgestells besteht hierbei aus einem hohlen Halbzylinder, in dem ein Halter untergebracht ist, an dem ein einziger radialer Arm mit einem Anschlagkörper und insgesamt acht Bearbeitungseinheiten befestigt ist. Der Halter mit den Bearbeitungseinheiten füllt dabei im wesentlichen zwei weitere Quadranten des Manipulatorquerschnitts aus. Die bekannte Lösung ist bevorzugt für das Befahren von Rohrleitungen mit einem Innendurchmesser von mehr als 200 mm vorgesehen.

Im Zuge zunehmend steigender Sicherheitsanforderungen hat es sich als notwendig erwiesen, Rohrinnenmanipulatoren zu entwickeln, die auch in Verbindung mit kleineren Rohrleitungsdurchmessern eingesetzt werden, beispielsweise bis hinunter zu etwa 80 mm Innendurchmesser.

Der Erfindung liegt daher die Aufgabe zugrunde, einen Rohrinnenmanipulator der eingangs beschriebenen Gattung anzugeben, der eine weitere Miniaturisierung erlaubt und bevorzugt, aber nicht ausschließlich für Rohrleitungen mit einem Innendurchmesser von weniger als 200 mm, vorzugsweise von weniger als 120 mm, verwendbar ist.

Die Lösung der gestellten Aufgabe erfolgt erfindungsgemäß durch die Merkmale des Anspruchs 1.

Durch die erfindungsgemäße Konstruktionsvorschrift wird eine außerordentlich große "Packungsdichte" der zum Drehgestell gehörenden Antriebs- und Führungseinrichtungen erreicht, d.h. die Hüllfläche, die man sich um einen derartigen Manipulator herum gelegt denken kann, ist außerordentlich weitgehend mit funktionellen Teilen ausgefüllt. Dadurch läßt sich das benötige "Fahrprofil" deutlich weiter verringern, ohne die Funktion der gesamten Vorrichtung in Frage zu stellen.

Durch die Maßnahme, daß der Halter im Drehgestell eine sternförmige Anordnung von gleichzeitig pneumatisch betätigbaren Anschlagkörpern mit mindestens je einer zugehörigen Bearbeitungseinheit aufweist, läßt sich die Anzahl der Bearbeitungseinheiten entsprechend der Zahl der Arme vergrößern, so daß gleichzeitig eine Vielzahl unterschiedlicher Bearbeitungs- und/oder Untersuchungsmethoden möglich ist.

Eine besonders raumsparende Anordnung wird im Zuge einer wiederum weiteren Ausgestaltung der Erfindung dadurch erreicht, daß die Achsen des Drehantriebs, des Stellmotors, der Gewindespindel und der Führungsstange wenigstens angenähert auf den Eckpunkten eines imaginären Quadrats liegen, dessen Diagonalen sich in der Systemachse (A-A) schneiden, und daß der Halter vier radiale Arme besitzt, die alternierend mit den Elementen a), b), c) und d) angeordnet sind und jeweils mindestens einen radialen Pneumatikantrieb aufweisen, durch den ein Anschlagkörper und eine Bearbeitungseinheit an die Rohrwandung heran bewegbar sind, derart, daß in der Bearbeitungsphase ständig mindestens vier Bearbeitungselemente und vier Anschlagkörper an der Rohrinnenwandung anliegen.

Während es mit dem bisher bekannten Rohrinnenmanipulator in der Regel nur möglich war, geradlinige Rohrabschnitte zu bearbeiten, ist es mit einem erfindungsgemäß weiter ausgestalteten Rohrinnenmanipulator auch möglich, die Innenflächen von Rohrkrümmern zu bearbeiten, dann nämlich, wenn die radialen Vorschubkräfte der Antriebe der Rollkörper der Fahrgestelle einerseits und die Betätigungskräfte der Anschlagkörper am Drehgestell andererseits konstruktiv derart aufeinander abgestimmt sind, daß die Lage der Systemachse A-A innerhalb einer Rohrkrümmers zumindest angenähert tangential zur Krümmerachse verläuft.

Zum Verständnis dies Vorgangs wird folgendes ausgeführt: Üblicherweise bestimmen die Rollkörper der Fahrgestelle die räumliche Lage der Systemachse A-A innerhalb des Krümmers, d.h. die Systemachse A-A bildet gegenüber der Krümmerachse eine Sehne oder Sekante, wobei die Schnittpunkte im Bereich der beiden Fahrgestelle liegen. Dies hat zur Folge, daß die Rotationsachse des Halters, die ja mit der Systemachse A-A zusammenfällt, erheblich exzentrisch zum Krümmerquerschnitt verläuft. Der Halter befindet sich im Normalzustand etwa in der Mitte zwischen beiden Fahrgestellen. Da der Halter mit den Bearbeitungseinheiten während der Bearbeitung rotiert, ergeben sich hierdurch erhebliche Bewegungsamplituden im Bereich der Anschlagkörper, die natürlich durch das pneumatische Antriebssystem aufgefangen werden müssen. Andererseits ergeben sich aber durch die unterschiedlichen Bewegungsradien wieder unterschiedliche Umfangsgeschwindigkeiten, die nach Möglichkeit nicht auftreten sollten. Durch die erfindungsgemäßen konstruktiven Maßnahmen, durch die die Systemachse A-A zumindest in größt mögliche Nähe der Tangente an die Krümmerachse gebracht wird, wird erreicht, daß die Drehachse des Halters und die Krümmerachse im wesentlichen zusammenfallen, so daß die beschriebenen Probleme nicht auftreten.

Die vorstehend beschriebene tangentiale Einstellung der Systemachse zur Krümmerachse kann in besonders einfacher Weise dadurch erreicht werden, daß zur Einstellung der Vorschubkräfte der Rollkörper an den Fahrgestellen verstellbare Endanschläge vorhanden sind. Beim Erreichen der Endanschläge werden die Vorschubkräfte zu Null. Man muß in diesem Falle lediglich wissen, welche Raumlage und welchen Krümmungsradius der betreffende Krümmer aufweist, um die Endanschläge an den Fahrgestellen entsprechend voreinstellen zu können. Weiterhin wird durch eine Einstellung der Vorschubkräfte der Anschlagkörper am Drehgestell durch Druckbegrenzer im Pneumatiksystem eine bestimmte Kräfterelation erzwungen, d.h. durch eine entsprechend hohe Einstellung der Druckbegrenzer im Pneumatiksystem übt der um die Systemachse A-A rotierende Halter eine zentrierende Wirkung auf den an dieser Stelle vorhandenen Rohrleitungsquerschnitt aus, wodurch die Zentrizität weiter verbessert wird.

Weitere vorteilhafte Ausgestaltungen des Erfindungsgegenstandes ergeben sich aus den übrigen Unteransprüchen.

Ein Ausführungsbeispiel eines erfindungsgemäßen Rohrinnenmanipulators wird nachfolgend anhand der Figuren 1 bis 8 näher erläutert.

Es zeigen:
- FIG 1: eine Seitenansicht der beiden Drehgestelle und einen teilweisen Axialschnitt durch das Drehgestell entlang der Linie I-I in Figur 4,
- FIG 2: gleichfalls eine Seitenansicht der beiden Drehgestelle, jedoch mit einem um 90 Grad gedrehten Drehgestell anhand eines teilweisen Axialschnitts entlang der Linie II-II in Figur 4,
- FIG 3: eine teilweise Frontalansicht eines Fahrgestells in Richtung des Pfeils III in Figur 1 sowie einen teilweisen Schnitt durch ein solches Fahrgestell,
- FIG 4: einen teilweisen Schnitt durch den Gegenstand von Figur 1 entlang der Linie IV-IV,
- FIG 5: den Halter nach Figur 4 in vergrößertem Maßstab und in Einzeldarstellung, wobei einer der vier Arme geschnitten entlang der Linie V-V dargestellt ist mit Blickrichtung in Richtung des Pfeils V in Figur 6,
- FIG 6: eine Draufsicht auf den Halter in Richtung der Pfeile VI in den Figuren 5 und 7, d.h. gegenüber Figur 5 um 90 Grad gedreht,
- FIG 7: eine teilweise Seitenansicht des Gegenstandes nach Figur 6 in Richtung des Pfeils VII und
- FIG 8: eine Prinzipdarstellung des Riementriebs zwischen dem Stellmotor des Axialantriebs und dessen Gewindespindel.

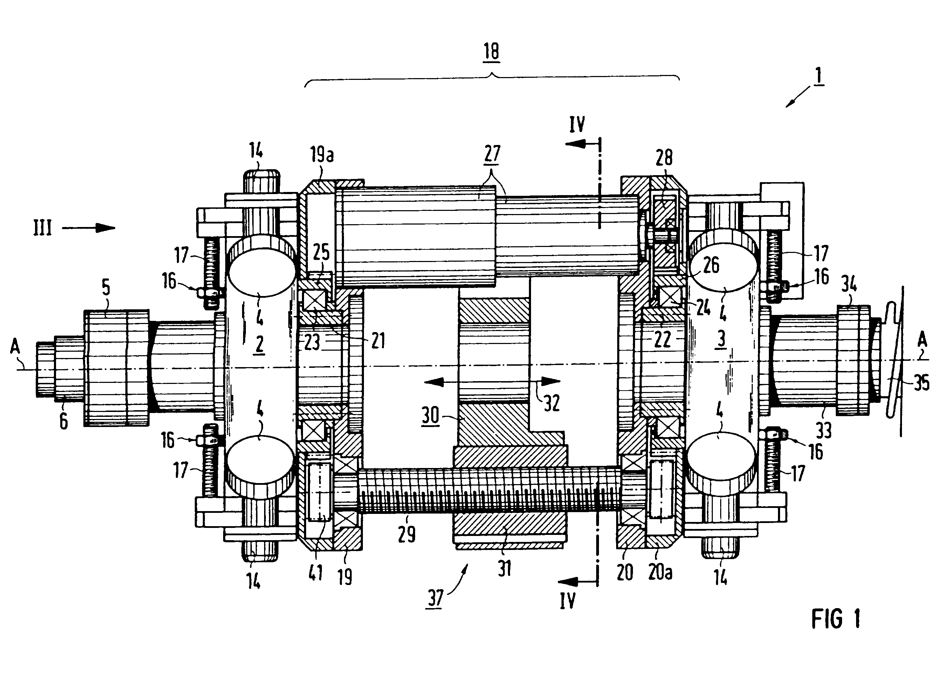

In Figur 1 ist der Bearbeitungsteil eines Rohrinnenmanipulators 1 dargestellt, zu dem zwei Fahrgestelle 2 und 3 gehören, die mit je vier Rollkörpern 4 ausgestattet sind, die im vorliegenden Falle als gummibereifte Räder ausgeführt sind. Das vordere Fahrgestell 2 ist mit einer Fernsehkamera 5 ausgestattet, deren Optik 6 koaxial auf den Fahrweg ausgerichtet ist.

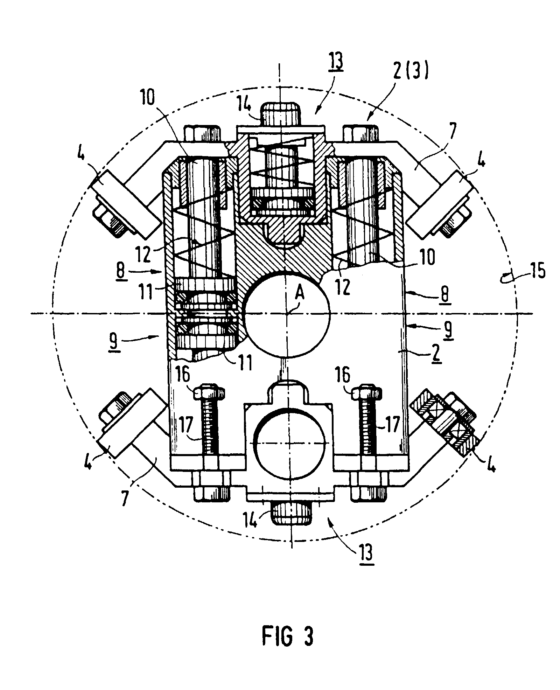

Wie sich aus Figur 3 ergibt, besitzen die Fahrgestelle 2 und 3 in spiegelsymmetrischer Anordnung je zwei abgewinkelte Bügel 7, an deren Enden die Rollkörper 4 befestigt sind. Die Bügel 7 sind mit entgegengesetzt wirkenden Antrieben 8 und 9 versehen, die als Pneumatikantriebe ausgeführt sind, und von denen jeder zwei parallele Kolbenstangen 10 mit Kolben 11 besitzt. Durch Rückstellfedern 12 werden die Kolben 11 in drucklosem Zustand in der dargestellten, eingezogenen Stellung gehalten.

Jeder der beiden Bügel 7 besitzt in seiner Mitte eine Arretiereinrichtung 13 mit einem Blockierstift 14, der an einem nicht näher bezeichneten Kolben befestigt ist. Durch Druckbeaufschlagung der beiden Kolben kann erreicht werden, daß die beiden Blockierstifte 14 an die innere Rohrwandung 15 gepreßt werden, so daß das Fahrgestell und damit der Manipulator festgelegt sind. Durch die Antriebe 8 und 9 werden die Rollkörper 4 gleichfalls gegen die Rohrwandung 15 gepreßt, wodurch eine ungewollte Drehung um die Systemachse A-A verhindert wird.

Die Ausfahrbewegung der Kolbenstangen 10 und damit der Rollkörper 4 wird durch verstellbare Endanschläge 16 begrenzt, die durch Muttern auf Schrauben 17 gebildet werden, die zu den Kolbenstangen 10 parallel verlaufen. Durch entsprechende Voreinstellung der Endanschläge 16 kann erreicht werden, daß die Systemachse A-A im Bereich der Fahrgestelle exzentrisch zur Achse eines Rohrkrümmers verläuft, im Bereich des weiter unten noch näher beschriebenen Halters jedoch tangential zu der besagten Krümmerachse.

Die Pneumatikleitungen und -bohrungen sind in Figur 3 der Einfachheit halber nicht dargestellt; sie ergeben sich aus der angegebenen Funktion.

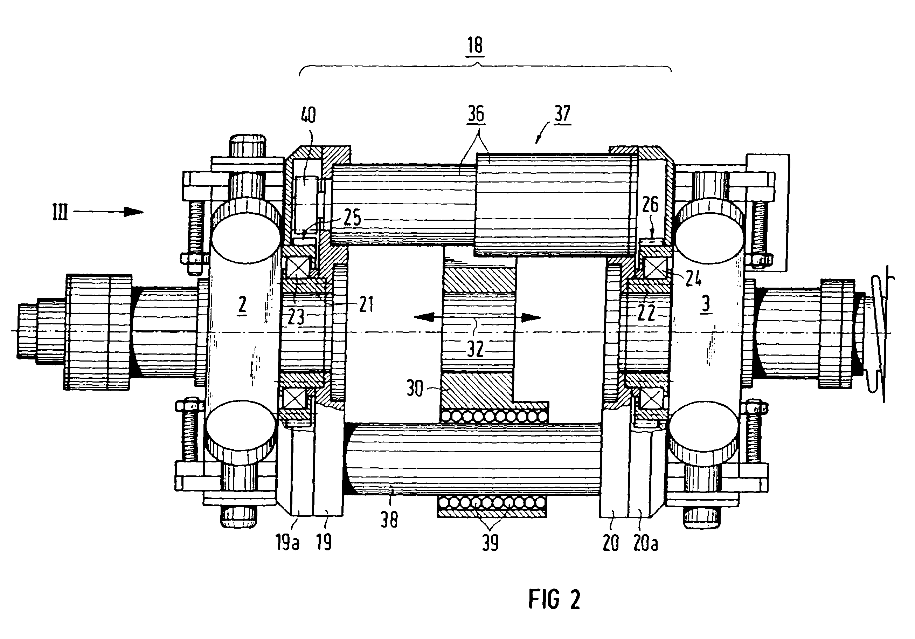

Gemäß den Figuren 1 und 2 befindet sich zwischen den Fahrgestellen 2 und 3 ein Drehgestell 18, zu dem zwei radiale Flanschplatten 19 und 20 gehören. Mit diesen Flanschplatten 19 und 20 ist je ein Lagerring 21 bzw. 22 verschraubt, der auf seinem Außenumfang je ein Wälzlager 23 bzw. 24 trägt. Dieses Wälzlager 23 bzw. 24 ist wiederum in jeweils einem Zahnkranz 25 bzw. 26 untergebracht, der mit dem Fahrgestell 2 einerseits und mit dem Fahrgestell 3 andererseits verschraubt ist. Dadurch werden zwischen den beiden Fahrgestellen 2 und 3 und dem Drehgestell 18 zwei zur Systemachse A-A konzentrische Drehlager für das Drehgestell gebildet.

Gemäß Figur 1 erstreckt sich zwischen den beiden Flanschplatten 19 und 20 zunächst ein Drehantrieb 27 in Form eines Getriebemotors, dessen Abtriebswelle über ein Ritzel 28 mit dem Zahnkranz 26 am Fahrgestell 3 zusammenwirkt. Durch entsprechende Ansteuerung des Drehantriebs 27 kann dem Drehgestell 18 eine ganz bestimmte Raumlage gegenüber den beiden Fahrgestellen 2 und 3 aufgezwungen werden.

Zwischen den beiden Flanschplatten 19 und 20 befindet sich weiterhin eine beidendig gelagerte Gewindespindel 29, die auf eine nachstehend noch näher beschriebene Weise angetrieben wird. Diese Gewindespindel 29 dient zur axialen Verschiebung eines Halters 30, der in Figur 1 nur teilweise dargestellt ist, und zu dem eine Spindelmutter 31 gehört, die als Kugelumlauf-Mutter ausgeführt ist, was hier der Einfachheit halber jedoch nicht näher dargestellt ist. Durch Drehung der Gewindespindel 29 läßt sich der Halter 30 in Richtung des Doppfelpfeils 32 gegenüber dem Drehgestell 18 verfahren, um auf diese Weise beispielhaft nacheinander die Bereiche beiderseits einer Schweißnaht durch Ultraschallprüfung untersuchen zu können. Die Flanschplatten 19 und 20 sind auf den den Zahnkränzen 25 und 26 und den Wälzlagern 23 und 24 zugekehrten Seiten durch kongruente Deckel 19a und 20a abgedeckt.

Das hintere Fahrgestell 3 ist mit einem Rohrstutzen 33 versehen, der über eine Flanschverbindung 34 an einen Faltenbalg 35 angeschlossen ist, der die Verbindung zu einem nachfolgenden Rohrfahrzeug herstellt, das beispielsweise als Antriebsfahrzeug ausgebildet ist. Derartige Faltenbälge ermöglichen eine hohe Flexibilität und damit eine gute Kurvengängigkeit eines ganzen Systems von Rohrinnenmanipulatoren.

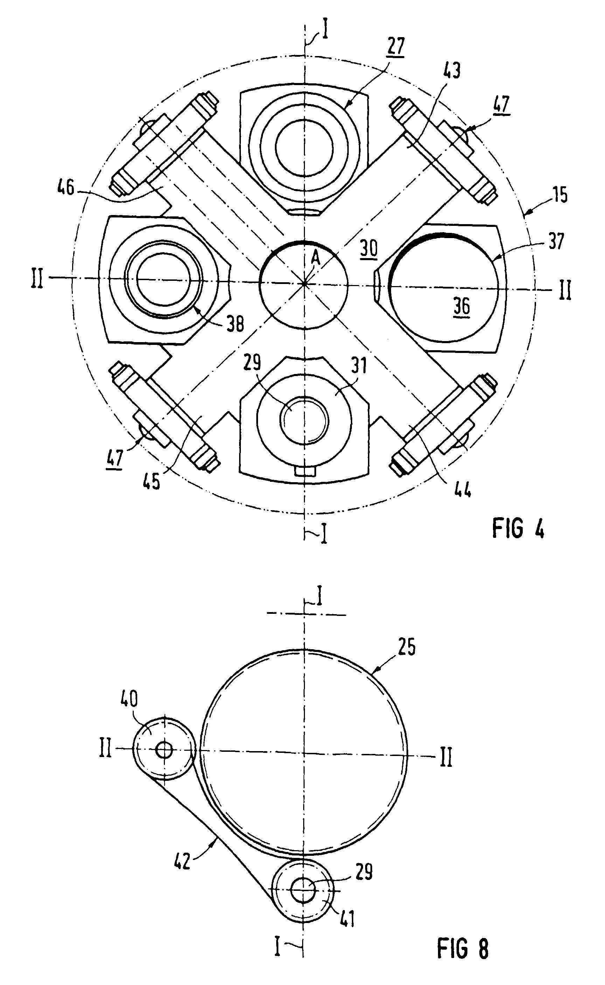

Figur 2 zeigt die Fahrgestelle 2 und 3 in der gleichen Darstellung wie in Figur 1, jedoch ist das Drehgestell 18 gegenüber der Darstellung in Figur 1 um 90 Grad gedreht. In diesem Fall liegt in der Schnittebene gemäß der Linie II-II in Figur 4 der Stellmotor 36 eines Axialantriebs 37, zu dem auch die Gewindespindel 29 gemäß Figur 1 gehört. Auch dieser Stellmotor ist als Getriebemotor ausgeführt und zwischen den Flanschplatten 19 und 20 befestigt. Dem Stellmotor 36 diametral gegenüber liegend ist eine Führungsstange 38 angeordnet, die gleichfalls zwischen den Flanschplatten 19 und 20 befestigt ist, und auf der der Halter 30 mittels einer Kugelbüchse 39 geführt ist. Der Stellmotor 36 des Axialantriebs 37 besitzt eine Zahnscheibe 40, die auf eine in Figur 8 gezeigte Weise mit einer weiteren Zahnscheibe 41 zusammen wirkt, die sich am vorderen Ende der Gewindespindel 29 befindet (Figur 1). Die Zahnscheiben 40 und 41 sind durch einen Zahnriemen 42 miteinander verbunden, dessen eines Trumm um den vorderen Zahnkranz 25 bogenförmig herumgeführt ist, wie dies in Figur 8 dargestellt ist. Auf diese Weise wird eine besonders platzsparende Anordnung erreicht.

Figur 4 zeigt, daß der Halter 30 sternförmig ausgebildet ist und vier Arme 43, 44, 45 und 46 besitzt, von denen jeder mit mindestens einem pneumatisch betätigbaren Anschlagkörper 47 versehen ist, der gegen die Rohrwandung 15 verschoben werden kann.

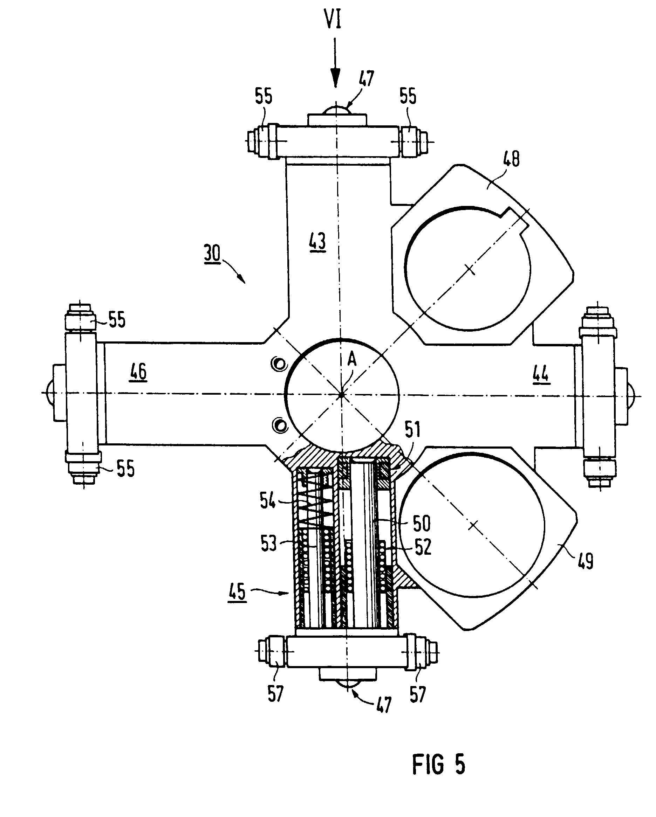

Wie sich insbesondere aus Figur 4 ergibt, sind die Achsen des Drehantriebs 27, des Stellmotors 36, der Gewindespindel 29 und der Führungsstange 38 auf den Eckpunkten eines imaginären Quadrats angeordnet, dessen Diagonalen sich in der Systemachse A-A schneiden. Die vier radialen Arme 43 bis 46 des Halters 30 sind alternierend mit den besagten Achsen von Drehantrieb, Stellmotor, Gewindespindel und Führungsstange angeordnet und weisen jeweils mindestens einen radialen Pneumatikantrieb auf, der anhand von Figur 5 noch näher erläutert werden wird.

Aus Figur 5 ist ersichtlich, daß der Halter 30 von seiner Grundkonzeption her sternförmig bzw. kreuzförmig ausgebildet ist und die bereits beschriebenen Arme 43 bis 46 aufweist. Zwischen den Armen 43 und 44 befindet sich ein Auge 48 für die Aufnahme der Spindelmutter 31 (Figuren 1 und 4), und zwischen den Armen 44 und 45 befindet sich ein hohler Führungskörper 49 für die Aufnahme der Führungsstange 38. Auch Figur 5 zeigt die räumlich äußerst kompakte und vor allem auch verwindungssteife Ausführung der gesamten beweglichen Elemente des Manipulators. In Figur 5 ist lediglich der Arm 45 geschnitten, wobei diese Darstellung aber stellvertretend für die übrigen Arme 43, 44 und 46 steht. Jeder der Anschlagkörper 47 ist über eine Kolbenstange 50 mit einem Kolben 51 verbunden und in einer Kugelbüchse 52 geführt. Um ein Verdrehen des Anschlagkörpers 47 und der mit diesem verbundenen Bearbeitungseinheit zu verhindern, ist parallel zur Kolbenstange 50 eine Führungsstange 53 angeordnet, die gleichfalls in einer Kugelbüchse geführt ist und unter der Wirkung einer Rückstellfeder 54 steht. Sobald sämtliche Kolben 51 mit Druckluft beaufschlagt werden, werden die Anschlagkörper 47 zur Anlage an der Rohrinnenwandung 15 gebracht, wodurch eine zentrierende Wirkung auf den Halter 30 ausgeübt wird, und zwar zentrierend in Bezug auf die Systemachse A-A.

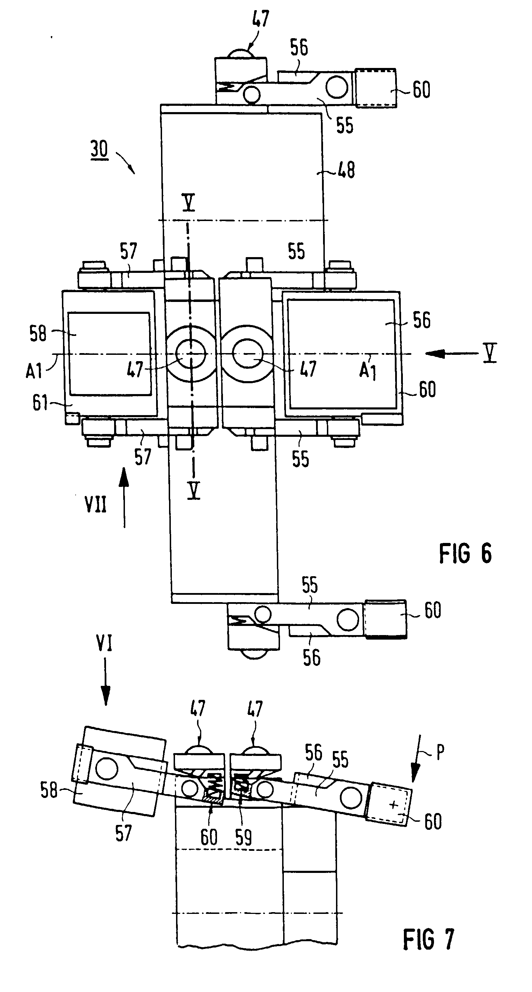

Die Figuren 6 und 7 zeigen, daß in Richtung der Systemachse A-A in jedem der Arme 43 bis 46 jeweils zwei Anschlagkörper 47 angeordnet sind. In Figur 5 muß man sich also hintereinanderliegend in jedem der Arme einen Pneumatikantrieb und eine Führungseinheit angeordnet denken. Jedem dieser Anschlagkörper 47 ist über zwei Gelenkhebel 55 eine Bearbeitungseinheit 56 zugeordnet, die im vorliegenden Fall aus einem Ultraschallkopf mit Geber und Empfänger besteht, so daß hierdurch die Beschaffenheit der Rohrwandung untersucht werden kann, insbesondere die Qualität von Schweißnähten. Derartige Bearbeitungseinheiten sind Stand der Technik, so daß hierauf nicht näher eingegangen zu werden braucht. Ein Halter 30 gemäß Figur 6 ist auf dem Umfang mit insgesamt vier Bearbeitungseinheiten 56 versehen, die durch kontinuierliche Drehung des Halters 30 nacheinander mit der Rohrwandung in Wechselwirkung gebracht werden können. Die hierbei erhaltenen Meßsignale werden protokolliert bzw. registriert und dienen zum Nachweis der einwandfreien Beschaffenheit der Rohrwandung, insbesondere der Schweißnähte.

Auf der gegenüberliegenden Seite ist einer der Anschlagkörper 47 über zwei Gelenkhebel 57 mit einem Positionsgeber 58 verbunden, der mit einem außerhalb des Rohres angeordneten Positionsempfänger zusammenwirkt, der hier nicht dargestellt ist. Aus Figur 7 ist ersichtlich, daß die Gelenkhebel 55 und 57 unter der Wirkung von Druckfedern 59 und 60 stehen, durch die die Bearbeitungseinheiten 56 und der Positionsgeber 58 radial nach außen, d.h. vor die Anschlagkörper 47 geschwenkt werden. Da die Gelenkhebel 55 jeweils zwei parallele Achsen aufweisen, können die Bearbeitungseinheiten 56 und der Positionsgeber 58 zur völligen Anlage an der Rohrwandung gebracht werden. In Figur 7, rechts, ist dargestellt, was geschieht, wenn eine äußere Kraft P auf die Bearbeitungseinheit 56 einwirkt: Die Druckfeder 59 wird zusammengepreßt, und die Bearbeitungseinheit 56 kann nach innen ausweichen. Ein solcher Zustand tritt beispielsweise ein, wenn der Manipulator einen Rohrkrümmer durchfährt. Der Vollständigkeit halber sei noch erwähnt, daß die Bearbeitungseinheiten 56 und der Positionsgeber 58 innerhalb von Rahmen 60 bzw. 61 angeordnet sind und in diesen Rahmen um weitere Achsen A1 schwenkbar sind, so daß eine kardanische Aufhängung gewährleistet ist.

## Patentansprüche

1. Rohrinnenmanipulator (1) mit Einrichtungen für die Bearbeitung, insbesondere für die Prüfung, von Rohrwandungen (15) mit zwei Fahrgestellen (2, 3), von denen Rollkörper (4) mittels entgegengesetzt wirkender Antriebe (8, 9) gegen die Rohrwandung (15) bewegbar sind, und mit einem zwischen den Fahrgestellen (2, 3) angeordneten und an diesen um eine gemeinsame, in Fahrtrichtung verlaufende Systemachse (A-A) drehbar gelagerten Drehgestell (18) mit einem axial verschiebbaren Halter (30) mit mindestens einem radialen Arm (43, 44, 45, 46) an dem mindestens je ein Anschlagkörper (47) und eine Bearbeitungseinheit (56, 58), radial verschiebbar angeordnet sind, wobei das Drehgestell (18) zwei radiale Flanschplatten (19, 20) aufweist, zwischen denen
a) ein Drehantrieb (27) für das Drehgestell (18),
b) ein Stellmotor (36) eines Axialantriebs (37) für den Halter (30) der Bearbeitungseinheiten (56, 58),
c) eine Gewindespindel (29) des Axialantriebs (37) und
d) eine Führungsstange (38) für den Halter (30) mit den Bearbeitungseinheiten (56, 58)
in der Weise angeordnet sind, daß die Achsen von a), b), c) und d) parallel zur Systemachse (A-A) verlaufen, wobei der Drehantrieb (27), der Stellmotor (36), die Gewindespindel (29) und die Führungsstange (38) wenigstens angenähert äquidistant verteilt um die Systemachse (A-A) herum gruppiert sind und daß der mindestens eine radiale Arm (43, 44, 45, 46) des Halters (30) durch jeweils einen der Zwischenräume innerhalb der Gruppe aus Drehantrieb (27), Stellmotor (36), Gewindespindel (29) und Führungsstange (38) in Richtung auf die Rohrwandung (15) nach außen geführt ist , und wobei der Halter (30) im Drehgestell (18) eine sternförmige Anordnung von gleichzeitig pneumatisch betätigbaren Anschlagkörpern (47) mit mindestens je einer zugehörigen Bearbeitungseinheit (56, 58) aufweist.

2. Rohrinnenmanipulator nach Anspruch 1,
**dadurch gekennzeichnet**, daß die Achsen des Drehantriebs (27), des Stellmotors (36), der Gewindespindel (29) und der Führungsstange (38) wenigstens angenähert auf den Eckpunkten eines imaginären Quadrats liegen, dessen Diagonalen sich in der Systemachse (A-A) schneiden, und daß der Halter (30) vier radiale Arme (43, 44, 45, 46) besitzt, die alternierend mit den Elementen a), b), c) und d) angeordnet sind und jeweils mindestens einen radialen Pneumatikantrieb (50, 51) aufweisen, durch den ein Anschlagkörper (47) und eine Bearbeitungseinheit (56, 58) an die Rohrwandung (15) heran bewegbar sind, derart, daß in der Bearbeitungsphase ständig mindestens vier Bearbeitungselemente (56, 58) und vier Anschlagkörper (47) an der Rohrinnenwandung (15) anliegen.

3. Rohrinnenmanipulator nach Anspruch 1,
**dadurch gekennzeichnet,** daß die radialen Vorschubkräfte der Antriebe (8, 9) der Rollkörper (4) der Fahrgestelle (2, 3) einerseits und die Betätigungskräfte der Anschlagkörper (47) am Drehgestell (18) andererseits konstruktiv derart aufeinander abgestimmt sind, daß die Lage der Systemachse (A-A) innerhalb eines Rohrkrümmers zumindest angenähert tangential zur Krümmerachse verläuft.

4. Rohrinnenmanipulator nach Anspruch 3,
**dadurch gekennzeichnet,** daß zur Einstellung der Vorschubkräfte der Rollkörper (4) an den Fahrgestellen (2, 3) verstellbare Endanschläge (16) vorhanden sind.

5. Rohrinnenmanipulator nach Anspruch 3,
**dadurch gekennzeichnet,** daß zur Einstellung der Vorschubkräfte der Anschlagkörper (47) am Drehgestell (18) Druckbegrenzer im Pneumatiksystem vorgesehen sind.

6. Rohrinnenmanipulator nach Anspruch 3,
**dadurch gekennzeichnet,** daß der Hub der Pneumatikantriebe (50, 51) für die Anschlagkörper (47) und die Bearbeitungseinheiten (56, 58) so dimensioniert ist, daß die Grenzlagen der Anschlagkörper (47) innerhalb und außerhalb des Nenndurchmessers der zu befahrenden Rohrleitung liegen.

7. Rohrinnenmanipulator nach Anspruch 1,
**dadurch gekennzeichnet,** daß der Drehantrieb (27) für das Drehgestell (18) über ein Ritzel (28) auf einen Zahnkranz (26) einwirkt, der an einem der Fahrgestelle (3) angeordnet ist.

8. Rohrinnenmanipulator nach Anspruch 1
**dadurch gekennzeichnet,** daß der Stellmotor (36) des Axialantriebs (37) mit dessen Gewindespindel (29) über einen Zahnriemen (42) zusammenwirkt, der in Form einer gebogenen Schlaufe um einen Teilumfang des Zahnkranzes (25) zwischen Fahrgestell (2) und Drehgestell (18) herumgeführt ist.

9. Rohrinnenmanipulator nach Anspruch 1,
**dadurch gekennzeichnet,** daß die Bearbeitungseinheiten (56, 58) mindestens teilweise Ultraschallprüfköpfe sind.

10. Rohrinnenmanipulator nach Anspruch 1,
**dadurch gekennzeichnet,** daß mindestens eine der Bearbeitungseinheiten (58) ein Positionsgeber für einen außerhalb des Rohres angeordneten Positionsempfänger ist.

11. Rohrinnenmanipulator nach Anspruch 1,
**dadurch gekennzeichnet,** daß einem der Fahrgestelle mindestens ein Wegzähler zugeordnet ist.

12. Rohrinnenmanipulator nach Anspruch 1
**dadurch gekennzeichnet,** daß mindestens eine der Bearbeitungseinheiten eine Schweißeinheit ist.

13. Rohrinnenmanipulator nach Anspruch 1
**dadurch gekennzeichnet,** daß mindestens eine der Bearbeitungseinheiten eine Schleifeinheit ist.

## Claims

1. Internal pipe manipulator (1) with devices for conditioning, in particular for testing, pipe walls (15), with two carriages (2, 3), by which rolling bodies (4) can be moved against the pipe wall (15) by means of oppositely acting drives (8, 9), and with a bogie (18) arranged between the carriages (2, 3) and rotatably mounted thereon about a common system axis (A-A) extending in the direction of travel, the bogie having an axially displaceable holder (30) with at least one radial arm (43, 44, 45, 46) on which at least one respective stop body (47) and one conditioning unit (56, 58) are arranged in a radially displaceable manner, with the bogie (18) having two radial flange plates (19, 20), between which
a) a rotary drive (27) for the bogie (18),
b) a servomotor (36) of an axial drive (37) for the holder (30) of the conditioning units (56, 58),
c) a threaded spindle (29) of the axial drive (37) and
d) a guide rod (38) for the holder (30) with the conditioning units (56, 58)
are arranged in such a way that the axes of a), b), c) and d) extend parallel to the system axis (A-A), with the rotary drive (27), the servomotor (36), the threaded spindle (29) and the guide rod (38) being grouped around the system axis (A-A), distributed at least approximately equidistantly, and with the at least one radial arm (43, 44, 45, 46) of the holder (30) being guided to the outside in the direction of the pipe wall (15) through in each case one of the intermediate spaces within the group comprising rotary drive (27), servomotor (36), threaded spindle (29) and guide rod (38), and with the holder (30) in the bogie (18) having a star-shaped arrangement of stop bodies (47) which can be pneumatically operated simultaneously, with at least one respective associated conditioning unit (56, 58).

2. Internal pipe manipulator according to claim 1, characterized in that the axes of the rotary drive (27), the servomotor (36), the threaded spindle (29) and the guide rod (38) lie at least approximately on the corner points of an imaginary square, the diagonals of which intersect at the system axis (A-A), and in that the holder (30) has four radial arms (43, 44, 45, 46), which are arranged alternately with the elements a), b), c) and d) and each have at least one radial pneumatic drive (50, 51), by means of which a stop body (47) and a conditioning unit (56, 58) can be moved up to the pipe wall (15), in such a way that in the conditioning phase at least four conditioning elements (56, 58) and four stop bodies (47) constantly abut the internal pipe wall (15).

3. Internal pipe manipulator according to claim 1, characterized in that the radial feeding forces of the drives (8, 9) of the rolling bodies (4) of the carriages (2, 3) on the one hand and the actuating forces of the stop bodies (47) on the bogie (18) on the other hand are coordinated structurally with each other in such a way that the position of the system axis (A-A) within a curve of a pipe extends at least approximately tangentially to the curved axis.

4. Internal pipe manipulator according to claim 3, characterized in that adjustable end stops (16) are present to adjust the feeding forces of the rolling bodies (4) at the carriages (2, 3).

5. Internal pipe manipulator according to claim 3, characterized in that pressure limiters are provided in the pneumatic system to adjust the feeding forces of the stop bodies (47) on the bogie (18).

6. Internal pipe manipulator according to claim 3, characterized in that the stroke of the pneumatic drives (50, 51) for the stop bodies (47) and the conditioning units (56, 58) is dimensioned in such a way that the limit positions of the stop bodies (47) lie inside and outside the nominal diameter of the pipeline to be inspected.

7. Internal pipe manipulator according to claim 1, characterized in that the rotary drive (27) for the bogie (18) acts by way of a pinion (28) on a ring gear (26) which is arranged on one of the carriages (3).

8. Internal pipe manipulator according to claim 1, characterized in that the servomotor (36) of the axial drive (37) cooperates with its threaded spindle (29) by way of a toothed belt (42) which is guided in the form of a bent loop around a partial circumference of the ring gear (25) between the carriage (2) and the bogie (18).

9. Internal pipe manipulator according to claim 1, characterized in that the conditioning units (56, 58) are at least partially ultrasonic probes.

10. Internal pipe manipulator according to claim 1, characterized in that at least one of the conditioning units (58) is a position transmitter for a position receiver arranged outside the pipe.

11. Internal pipe manipulator according to claim 1, characterized in that at least one displacement gauge is allocated to one of the carriages.

12. Internal pipe manipulator according to claim 1, characterized in that at least one of the conditioning units is a welding unit.

13. Internal pipe manipulator according to claim 1, characterized in that at least one of the conditioning units is a grinding unit.

## Revendications

1. Manipulateur (1) pour intérieur de conduits comportant des dispositifs pour le traitement, notamment pour le contrôle, de parois (15) de conduits, comportant deux chariots (2, 3) dont les éléments (4) roulants peuvent être déplacés sur la paroi (15) de conduits au moyen de dispositifs (8, 9) d'entraînement agissant en sens opposés, et comportant une plate-forme (18) tournante qui est disposée entre les chariots (2, 3), qui est montée tournante sur ceux-ci par rapport à un axe (A-A) commun du système s'étendant dans la direction de déplacement et qui comporte un dispositif (30) de fixation qui peut coulisser axialement et qui comporte au moins un bras (43, 44, 45, 46) radial sur lequel sont montés, de manière à pouvoir coulisser radialement au moins un élément (47) formant butée et une unité (56, 58) de traitement, la plate-forme (18) tournante comportant deux plateaux (19, 20) radiaux de flasques entre lesquels
a) un dispositif (27) d'entraînement pour la plate-forme (18) tournante,
b) un moteur (36) de réglage d'un dispositif (37) d'entraînement axial pour le dispositif (30) de fixation des unités (56, 58) de traitement,
c) une broche (29) filetée du dispositif (37) d'entraînement axial et
d) une tige (38) de guidage pour le dispositif (30) de fixation comportant les unités (56, 58) de traitement
sont montés de telle manière que les axes de a), b), c) et d) s'étendent parallèlement à l'axe (A-A) du système, le dispositif (27) d'entraînement, le moteur (36) de réglage, la broche (29) filetée et la tige (38) de guidage étant groupés autour de l'axe (A-A) du système en étant répartis de manière au moins à peu près équidistante, et le au moins un bras (43, 44, 45, 46) radial du dispositif (30) de fixation étant guidé vers l'extérieur en direction de la paroi (15) de conduit par chaque fois l'un des intervalles à l'intérieur du groupe constitué du dispositif (27) d'entraînement en rotation, du moteur (36) de réglage, de la broche (29) filetée et de la tige (38) de guidage, et le dispositif (30) de fixation dans la plate-forme (18) tournante comportant un dispositif en étoile d'éléments (47) de butée pouvant être actionné en même temps par air comprimé et comportant au moins chacun une unité (56, 58) de traitement associé.

2. Manipulateur pour intérieur de conduits suivant la revendication 1, caractérisé en ce que les axes du dispositif (27) d'entraînement en rotation, du moteur (36) de réglage, de la broche (29) filetée et de la tige (38) de guidage se trouvent à peu près aux sommets d'un carré imaginaire dont les diagonales se coupent sur l'axe (A-A) du système, et en ce que le dispositif (30) de fixation a quatre bras (43, 44, 45, 46) radiaux qui sont disposés en alternance avec les éléments a), b), c) et d) et qui comportent chacun au moins un dispositif (50, 51) d'entraînement radial à air comprimé par lequel un élément (47) formant butée et une unité (56, 58) de traitement peuvent être amenés à la paroi (15) de conduit de telle manière qu'au moins quatre éléments (56, 58) de traitement et quatre éléments (47) formant butées sont en contact en permanence avec la paroi (15) intérieure de conduit lors de la phase de traitement.

3. Manipulateur pour intérieur de conduits suivant la revendication 1, caractérisé en ce que les forces d'avancement radiales des dispositifs (8, 9) d'entraînement des éléments (4) roulants des chariots (2, 3), d'une part, et les forces d'actionnement des éléments (47) formant butées sur la plate-forme (18) tournante, d'autre part, sont adaptés du point de vue de la construction les unes aux autres de telle manière que la position de l'axe (A-A) du système à l'intérieur d'un coude de conduit s'étend au moins à peu près tangentiellement à l'axe du coude.

4. Manipulateur pour intérieur de conduits suivant la revendication 3, caractérisé en ce qu'il est présent sur les chariots (2, 3) des butées (16) d'extrémité réglables pour régler les forces d'avancement des éléments (4) roulants.

5. Manipulateur pour intérieur de conduits suivant la revendication 3, caractérisé en ce qu'il est prévu, sur la plate-forme (18) tournante des limiteurs de pression dans le système pneumatique pour régler les forces d'avancement des éléments (47) formant butées.

6. Manipulateur pour intérieur de conduits suivant la revendication 3, caractérisé en ce que la course des dispositifs (50, 51) d'entraînement à air comprimé pour les éléments (47) formant butées et les unités (56, 58) de traitement est dimensionnée de telle manière que les positions limites des éléments (47) formant butées se trouvent à l'intérieur et à l'extérieur du diamètre nominal du conduit à parcourir.

7. Manipulateur pour intérieur de conduits suivant la revendication 1, caractérisé en ce que le dispositif (27) d'entraînement en rotation pour la plate-forme (18) tournante agit par l'intermédiaire d'un pignon (28) sur une couronne (26) dentée qui est montée sur l'un (3) des chariots.

8. Manipulateur pour intérieur de conduits suivant la revendication 1, caractérisé en ce que le moteur (36) de réglage du dispositif (37) d'entraînement axial coopère avec sa broche (29) filetée par l'intermédiaire d'une courroie (42) dentée qui est guidée sous la forme d'une boucle en arc autour d'une partie du pourtour de la couronne (25) dentée entre le chariot (2) et la plate-forme (18) tournante.

9. Manipulateur pour intérieur de conduits suivant la revendication 1, caractérisé en ce que les unités (56, 58) de traitement sont au moins en partie des têtes de contrôle ultrasonores.

10. Manipulateur pour intérieur de conduits suivant la revendication 1, caractérisé en ce qu'au moins l'une des unités (58) de traitement est un indicateur de position pour un récepteur de position monté à l'extérieur du conduit.

11. Manipulateur pour intérieur de conduits suivant la revendication 1, caractérisé en ce qu'il est associé à l'un des chariots au moins un dispositif de mesure de trajet.

12. Manipulateur pour intérieur de conduits suivant la revendication 1, caractérisé en ce qu'au moins l'une des unités de traitement est une unité de soudure.

13. Manipulateur pour intérieur de conduits suivant la revendication 1, caractérisé en ce qu'au moins l'une des unités de traitement est une unité de polissage.
